# EUROPÄISCHE PATENTSCHRIFT

(11) **EP 4 222 451 B1**
(45) Veröffentlichungstag und Bekanntmachung des Hinweises auf die Patenterteilung: **01.04.2026**
(21) Anmeldenummer: 21736530.3
(22) Anmeldetag: 16.06.2021
(51) Int. Cl.: G01C 21/00, G01C 21/30

(54) **KARTENPLAUSIBILITÄTSPRÜFUNGSVERFAHREN**
MAP PLAUSIBILITY TEST METHOD
PROCÉDÉ D'ESSAI DE PLAUSIBILITÉ DE CARTES

(30) Priorität: 29.09.2020 DE 102020125448
(43) Veröffentlichungstag der Anmeldung: 09.08.2023
(73) Patentinhaber: Mercedes-Benz Group AG, 70372 Stuttgart (DE)
(72) Erfinder: STUEBLER, Manuel, 70599 Stuttgart (DE); ANTIC, Borislav, 70178 Stuttgart (DE); BIRKE, Manuel, Los Altos, California 94024 (US)
(74) Vertreter: Maiwald GmbH
(86) Internationale Anmeldenummer: PCT/EP2021/066299
(87) Internationale Veröffentlichungsnummer: WO 2022/069088

(56) Entgegenhaltungen:
- WO-A1-2020/078572
- DE-B3- 102018 204 501
- DEUSCH HENDRIK: "Random Finite Set-Based Localization and SLAM for Highly Automated Vehicles", SCHRIFTENREIHE DES INSTITUTS FÜR MESS-, REGEL-UND MIKROTECHNIK, UNIV. ULM, 1 December 2016 (2016-12-01), XP055843799, Retrieved from the Internet <URL:https://oparu.uni-ulm.de/xmlui/handle/123456789/4060> [retrieved on 20210922]
- WOOD MATTHEW ET AL: "SAFETY FIRST FOR AUTOMATED DRIVING", 13 July 2019 (2019-07-13), XP055844243, Retrieved from the Internet <URL:https://www.daimler.com/documents/innovation/other/safety-first-for-automated-driving.pdf> [retrieved on 20210923]
- ADAMS MARTIN ET AL: "SLAM Gets a PHD: New Concepts in Map Estimation", IEEE ROBOTICS & AUTOMATION MAGAZINE, IEEE SERVICE CENTER, PISCATAWAY, NJ, US, vol. 21, no. 2, 1 June 2014 (2014-06-01), pages 26 - 37, XP011550197, ISSN: 1070-9932, [retrieved on 20140606], DOI: 10.1109/MRA.2014.2304111
- GAO LIN ET AL: "Random-Finite-Set-Based Distributed Multirobot SLAM", IEEE TRANSACTIONS ON ROBOTICS, IEEE SERVICE CENTER, PISCATAWAY, NJ, US, vol. 36, no. 6, 2 July 2020 (2020-07-02), pages 1758 - 1777, XP011824943, ISSN: 1552-3098, [retrieved on 20201203], DOI: 10.1109/TRO.2020.3001664

## Beschreibung

Die vorliegende Erfindung betrifft ein Kartenplausibilitätsprüfungsverfahren

### Stand der Technik

Gegenwärtig sind zumindest wenigstens teilautonome Roboter, insbesondere teilweise automatisiert fahrende Fahrzeuge, in hohem Maße auf hochauflösende Karten, sogenannte HD-Karten, angewiesen, insbesondere um ihr künftiges Verhalten zu planen. Ein Verlassen lediglich auf Sensordaten des wenigstens teilautonomen Roboters führt möglicherweise zu ungewünschten Fehlern in der Einschätzung der Verkehrssituation. Sind die Kartendaten jedoch veraltet, so kann ein künftiges Verhalten des wenigstens teilautonomen Roboters ebenfalls nicht fehlerfrei geplant werden.

Es gibt daher den Wunsch nach einem Verfahren zum Prüfen einer Plausibilität von Kartendaten.

Deusch Hendrik: "Random Finite Set-Based Localization and SLAM for Highly Automated Vehicles", Schriftenreihe des Instituts für Mess-, Regel-und Mikrotechnik, Univ. Ulm, 1. Dezember 2016 (2016-12-01), offenbart eine Methode zur Lokalisierung für hochautomatisierte Fahrzeuge, die mit seriennaher SensorTechnik ausgestattet sind. Dabei wird auf das bekannte Monte-Carlo-Lokalisierungsverfahren - in diesem Fall die merkmalsbasierte Schätzung der Fahrzeugpose mit Hilfe eines Partikelfilters - zurückgegriffen. Für den Erfolg des Verfahrens sind im wesentlichen zwei Faktoren entscheidend: Die verwendeten Merkmale bzw. Landmarken sowie die Funktion zur Bestimmung der Partikelgewichte. Es werden Landmarken beschrieben, die besonders zur Lokalisierung von hochautomatisierten Fahrzeugen geeignet sind.

DE102018204501 B3 offenbart ein System zur Erzeugung von Konfidenzwerten für Objekte in einer digitalen Straßenkarte für Fahrzeuge, z. B. Autos, mit einem Backend, das so angepasst ist, dass es keine Reduzierung des Konfidenzwerts des jeweiligen Objekts in den empfangenen Daten vornimmt, wenn das Objekt verdeckt ist.

### Offenbarung der Erfindung

Ausführungsformen der Erfindung stellen ein Kartenplausibilitätsprüfungsverfahren gemäß den unabhängigen Ansprüchen zur Verfügung. Zweckmäßige Weiterbildungen der Erfindung ergeben sich aus den abhängigen Ansprüchen, der Beschreibung sowie den begleitenden Figuren.

Gemäß einem Aspekt der Erfindung umfasst ein Kartenplausibilitätsprüfungsverfahren die folgenden Schritte. Empfangen von Sensordaten eines wenigstens teilautonomen Roboters, die mindestens ein erfasstes Element abbilden, wobei das mindestens eine erfasste Elemente ein Umgebungselement des wenigstens teilautonomen Roboters, wie es von einem Umgebungssensor des wenigstens teilautonomen Roboters erfasst wird, darstellt. Empfangen von Kartendaten, die eine Karte mit mindestens einem Kartenelement abbilden, wobei das mindestens eine Kartenelement ein Umgebungselement des wenigstens teilautonomen Roboters, wie es auf einer vorher festgelegten Karte eingetragen ist, darstellt. Bestimmen von Lokalisierungsdaten aus den empfangenen Sensordaten, wobei die Lokalisierungsdaten eine Position des wenigstens teilautonomen Roboters auf der Karte angeben. Bestimmen einer Datenunsicherheit, wobei die Datenunsicherheit eine Sensordatenunsicherheit, eine Kartendatenunsicherheit und/oder eine Lokalisierungsdatenunsicherheit umfasst. Initialisieren einer Existenzwahrscheinlichkeit für das mindestens eine Kartenelement mit einem Anfangswert. Aktualisieren der Existenzwahrscheinlichkeit des mindestens einen Kartenelements unter Verwendung der Kartendaten, der Sensordaten, der Lokalisierungsdaten und den Datenunsicherheiten.

Vorzugsweise umfassen die Sensordaten des wenigstens teilautonomen Roboters online-Sensordaten, die von Sensoren des wenigstens teilautonomen Roboters detektiert werden. Die Sensordaten umfassen vorzugsweise Kameradaten, Lidardaten, Radardaten und/oder GPS-Daten.

Der Begriff "Kartenelement", wie er hier benutzt wird, umfasst insbesondere Verkehrszeichen, wie Verkehrsschilder oder Ampelanlagen, sowie Fahrbahnmarkierungen.

Allgemein kann es sich bei dem wenigstens teilautonomen Roboter um ein zumindest teilweise automatisiert fahrendes Fahrzeug handeln. Alternativ dazu, kann es sich bei dem wenigstens teilautonomen Roboter auch um einen anderen mobilen Roboter handeln, beispielsweise um einen solchen, der sich durch Fliegen, Schwimmen, Tauchen oder Schreiten fortbewegt. Bei dem mobilen Roboter kann es sich beispielsweise auch um einen wenigstens teilautonomen Rasenmäher oder einen wenigstens teilautonomen Putzroboter oder ähnliches handeln.

Vorzugsweise umfasst das Initialisieren einer Existenzwahrscheinlichkeit ein Bestimmen eines Anfangswertes für die Existenzwahrscheinlichkeit des Kartenelements, wobei der Anfangswert eine tendenzielle Existenzwahrscheinlichkeit angibt, die dem Kartenelement ohne Vorliegen von Sensordaten zugeordnet wird.

Vorzugsweise umfassen die Lokalisierungsdaten GPS-Daten.

Vorzugsweise werden die Lokalisierungsdaten unter Nutzung der empfangenen Sensordaten und der empfangen Kartendaten bestimmt. Beispielsweise werden die Lokalisierungsdaten bestimmt durch Abgleich der Kartendaten mit den Sensordaten, insbesondere unter Zuhilfenahme von GPS-Daten. Somit geben die Lokalisierungsdaten eine zumindest abgeschätzte Position des wenigstens teilautonomen Roboters auf der Karte an.

Das Kartenplausibilitätsüberprüfungsverfahren verwendet somit die sogenannte Markov-Annahme, wonach der aktuelle Zustand nur vom vorigen Zustand und den aktuellen Sensordaten abhängig ist, aber nicht von der vollständigen Historie der Zustände. Auf diese Weise kann eine möglichst einfache Rechenlast des Kartenplausibilitätsüberprüfungsverfahren umgesetzt werden.

Vorzugsweise umfasst das Bestimmen der Datenunsicherheit ein Darstellen der Sensordaten, Kartendaten und der Lokalisierungsdaten in einer probabilitischen Darstellung.

Vorzugsweise umfasst die probabilitische Darstellung eine Bayesische Darstellung.

Die probabilistische Darstellung der Sensordaten berücksichtigt eine räumliche Unsicherheit von Sensormessungen, eine Störungsrate von Sensormessungen, eine Erkennungswahrscheinlichkeit von Kartenelementen durch den Sensor/die Sensoren und/oder eine Treffer- und Fehltrefferkonzentrationen in Abhängigkeit von der verwendeten Formulierung:
Eine Störung, die auch Clutter genannt wird, umfasst eine Sensormessung, also Sensordaten, die nicht von einem echten Objekt, also Kartenelement bestimmt sind, zum Beispiel eine Geistmessung.

Eine Störungsrate beschreibt die Anzahl an Störungsmessungen pro Zeitschritt, welche üblicherweise unter Verwendung einer Poisson-Verteilung modelliert wird, wenn Störungsmessungen unabhängig voneinander auftreten.

Vorzugsweise wird das Kartenplausibilitätsprüfungsverfahren in dem wenigstens teilautonomen Roboter, also in anderen Worten online, durchgeführt. Das Kartenplausibilitätsprüfungsverfahren verwendet nicht nur die Kartendaten und Sensordaten, sondern auch die Lokalisierung des wenigstens teilautonomen Roboters, d.h. seine geschätzte Position in Bezug auf die Karte. Die Aufgabe ist es, Kartenelemente zu bestätigen oder entfernen und so eine mögliche Abweichung zwischen den Kartendaten und den Sensordaten, also der Umgebung des wenigstens teilautonomen Roboters, zu erkennen.

Voraussetzung für die einwandfreie Funktion des Kartenplausibilitätsverfahrens ist nicht nur eine präzise Lokalisierung, sondern auch eine genaue Sensorkalibrierung. Der Grund dafür ist, dass eine festgestellte Abweichung zwischen Kartendaten und Sensordaten nicht nur durch eine falsche oder veraltete Karte, sondern auch durch eine schlechte Lokalisierung sowie einen falsch kalibrierten oder fehlerhaften Sensor verursacht werden kann.

Vorzugsweise wird eine gemeinsame Existenzwahrscheinlichkeit eines Kartenelements von verschiedenen Sensoren berechnet. Alternativ wird für jeden Sensor oder verschiedene Sensorkombinationen eine separate Existenzwahrscheinlichkeit eines Kartenelements berechnet.

Vorzugsweise umfassen die Sensordaten Daten aus nicht verfolgten Sensormessungen: Fehler von Sensormessungen haben keine oder nur eine geringe zeitliche Korrelation im Gegensatz zu verfolgten Elementen, die über die Zeit gefiltert werden. Messungen mit zeitlich unkorrelierten Messfehlern lassen sich viel leichter probabilistisch modellieren, und dieses Modell lässt sich auch leichter überprüfen, was im Rahmen der internen Validitätsprüfung geschieht. Es gehen keine Messungen verloren und das Kartenplausibilitätsprüfungsverfahren hat Zugang zu allen verfügbaren Informationen, insbesondere auch zu Störungsmessungen, die durch einen Verfolgungsalgorithmus herausgefiltert worden wären.

Das Aktualisieren der Existenzwahrscheinlichkeit fällt unter den Begriff der Elementfusion, oder Objektfusion. In anderen Worten wird die Existenzwahrscheinlichkeit für Kartenelemente berechnet, die durch die Fusion von Kartendaten und Sensordaten direkt beobachtbar sind. Dies kann für jeden Sensor einzeln ausgeführt werden, aber auch eine gemeinsame Existenzwahrscheinlichkeit auf der Grundlage aller verfügbaren Sensordaten auf einmal oder einer beliebigen Sensorkombination ist möglich.

Außerdem wird vorzugsweise neben der Existenzwahrscheinlichkeit eine aktualisierte Position des Kartenelements berechnet. Dies geschieht entweder inhärent durch den (Multi-)Bernoulli-Filter im Random-Finite-Set-Ansatz (kurz RFS-Ansatz) oder kann bei Bedarf als zusätzlicher Kalman-Filter über den Logarithmischen-binären-Bayesfilter-Ansatz (kurz Logit-Ansatz) hinzugefügt werden.

Die Berechnung der aktualisierten Existenzwahrscheinlichkeit von Kartenelementen im Horizont erfolgt für sichtbare Kartenelemente in jedem Zeitschritt unter Verwendung der probabilistischen Darstellung der Eingangsdaten.

Auf diese Weise wird eine verbesserte Verhaltens- und Trajektorienplanung in Hinblick auf die Sicherheit zur Verfügung gestellt.

Auf diese Weise wird eine ganzheitliche, genaue und aktuelle Darstellung der Umgebung des wenigstens teilautonomen Roboters basierend auf fusionierten Sensordaten und Kartendaten zur Verfügung gestellt.

Erfindungsgemäß umfasst das Kartenplausibilitätsprüfungsverfahren den folgenden Schritt. Projizieren des mindestens einen Kartenelements in einen Sensorraum des Umgebungssensors.

Kartenelemente, die Teil des Kartenhorizonts sind, werden in alle relevanten, z.B. nach vorne gerichteten, Sensoren, also deren Sensorraum, projiziert. Diese Projektion ist in der Regel einfach zu bewerkstelligen, während die umgekehrte Projektion von Sensorkoordinaten auf Kartenkoordinaten im Allgemeinen komplizierter oder sogar undefiniert ist, beispielsweise bei Monokameras. Der Kartenhorizont ist eine Teilmenge der Gesamtkarte, die aus Kartenelementen in der Umgebung des wenigstens teilautonomen Roboters besteht. Dieser Kartenhorizont umfasst mindestens das Sichtfeld aller relevanten Sensoren, ist aber typischerweise größer.

Nach einer bevorzugten Ausführungsform umfasst das Kartenplausibilitätsprüfungsverfahren den folgenden Schritt: Zuordnen des mindestens einen Kartenelements zu dem mindestens einen erfassten Element.

Beim Zuordnen werden eine vorher festgelegte Anzahl an besten globalen Zuordnungen von Sensordaten, also Sensormessungen, zur Abbildung von Elementen im Sensorraum unter Verwendung von Murtys Ranked-Assignment-Algorithmus und z.B. der ungarischen Methode als zugrundeliegenden Basis berechnet. Ranking-Zuordnungen können z.B. auf dem Multi-Objekt-Messmodell aus der RFS-Theorie basieren, das nicht nur die räumliche Unsicherheit von Sensormessungen, sondern auch die Störungsrate, Störungsintensität und die Detektionswahrscheinlichkeit erfasst. Insbesondere ist ein (Multi-)Bernoulli-Filter in der Lage, mit mehreren Zuordnungen umzugehen, die auf der Grundlage ihrer jeweiligen Wahrscheinlichkeit gewichtet werden, die bereits im Zuordnungsschritt berechnet wird. Diese Zuordnungen berücksichtigen insbesondere auch die Möglichkeit einer fehlenden Detektion (Kartenelement wird keiner Messung zugeordnet) und einer Störmessung (Messung wird keinem Kartenelement zugeordnet).

Vorzugsweise werden die Zuordnungen von erfassten Elementen und Kartenelementen nur einmal innerhalb des Systems und zwischen allen Modulen, die auf diese Informationen angewiesen sind, synchronisiert. Andernfalls würde das Kartenplausibilitätsprüfungsverfahren von anderen Funktionsmodulen entkoppelt werden, die eine völlig andere Zuordnung vornehmen und diese verwenden könnten, ohne dass die Richtigkeit dieser möglicherweise falschen Zuordnungen überprüft wurde. Die Zuordnungen von Messungen zur Abbildung von Kartenobjekten benötigen die Lokalisierung als Eingabe. Die Zuordnung stützt sich auf die vorhergesagte Lokalisierungsschätzung aus dem vorherigen Zeitschritt und die bereitgestellte Zuordnung wird zur Aktualisierung des kommenden Schritts des Lokalisierungsmoduls verwendet.

Nach einer bevorzugten Ausführungsform umfasst das Kartenplausibilitätsprüfungsverfahren den folgenden Schritt. Evaluieren der Existenzwahrscheinlichkeit des mindestens einen Kartenelements, wobei das Evaluieren eines der Ergebnisse Bestätigen des Kartenelements, Widerlegen des Kartenelements, potentiell neues Kartenelement und keine mögliche Aussage, umfasst.

Ein potentiell neues Kartenelement wird erkannt, wenn die Sensordaten zu keinem bestehenden Kartenelement zugeordnet werden können. Auf diese Weise können potentiell neue Kartenelemente identifiziert werden. In anderen Worten wird eine Wahrscheinlichkeit bestimmt, dass eine Messung, also die entsprechenden Sensordaten, nicht zu einem bestehenden Kartenelement zugeordnet werden kann. Folglich wird entweder ein potentiell neues Kartenelement gemeldet oder direkt ein neues Kartenelement initialisiert.

Nach einer bevorzugten Ausführungsform umfasst das Aktualisieren der Existenzwahrscheinlichkeit einen Random-Finite-Set-(RFS)-Ansatz oder einen Logit-Ansatz.

Der RFS-Ansatz bezieht sich auf ein Sensormodell basierend auf räumlicher Unsicherheit, Störungsrate, Störungsintensität und Entdeckungswahrscheinlichkeit unter Verwendung der Random-Finite-Set-Theorie.

Der Logit-Ansatz bezieht sich auf ein Sensormodell basierend auf Treffer- und Fehltrefferraten unter Verwendung einer logarithmischen (engl. "log-odds") Implementierung eines binären Bayes-Filters.

Der RFS-Ansatz ist zusätzlich in der Lage, zusätzlich zur Existenzwahrscheinlichkeit auch eine aktualisierte Position des Kartenelements durch Anwendung eines (Multi-) Bernoulli-Filters zu liefern, wobei der Logit-Ansatz mit einem Kalman-Filter kombiniert werden müsste, um ebenfalls eine Positionsaktualisierung zu liefern.

Mit all diesen Informationen ist es möglich, eine vorige Existenzwahrscheinlichkeit von Kartenelementen entweder mit dem RFS- oder dem Logit-Ansatz zu aktualisieren. Die Existenzwahrscheinlichkeit beschreibt, ob ein Kartenelement noch existiert oder nicht, basierend auf den gesammelten, aber unsicheren, Sensordaten. Kartenelemente, die überhaupt nicht sichtbar sind, werden nicht aktualisiert und behalten daher ihre Existenzwahrscheinlichkeit aus dem vorherigen Zeitschritt. Die Aktualisierung der Existenzwahrscheinlichkeit und vorzugsweise auch der Position eines Kartenelements erfolgt in jedem Zeitschritt, in dem ein Satz von Sensormessungen verfügbar ist. Beide Ansätze, RFS und Logit, folgen der Markov-Annahme, bei der der aktuelle Zustand des aktualisierten Kartenelements nur von der aktuellen Messung und seinem vorherigen Zustand abhängt, nicht aber von der vollständigen Historie des Zustands eines Kartenelements.

Das Aktualisieren der Existenzwahrscheinlichkeit geschieht entweder mit einem (Multi-) Bernoulli-Filter und einem RFS-basiertes Messmodell, das zusätzlich auch die Kartenobjektposition mit den Sensordaten als Nebenprodukt aktualisiert oder einem binären Bayes-Filter mit logarithmischen Wahrscheinlichkeiten (Logit) und entsprechenden Treffer-/Fehltrefferraten.

Der Multi-Bernoulli-Filter basiert auf der RFS-Theorie und berücksichtigt die räumliche Unsicherheit von Sensormessungen, die Störungs-Rate/Intensität des Sensors und die Detektionswahrscheinlichkeit von Kartenelementen.

Das binäre Bayes-Filter, auch einfach als Logit- oder log-odds-Ansatz bezeichnet, modelliert Treffer und Fehlmessungen eines Elements mit bestimmten Wahrscheinlichkeiten, wobei Messungen in der Nähe eines Kartenelements als Treffer betrachtet werden und keine Messungen in der Umgebung als Fehlmessung dieses bestimmten Kartenelements gelten würden, wenn es sichtbar wäre.

Für punktförmige - oder in Relation zum Sensorraum nur wenig ausgedehnte Objekte - kann der beschriebene Ansatz direkt angewendet werden, z.B. Ampeln, Verkehrsschilder, gestrichelte Fahrbahnmarkierungen, Pfähle, Baumstämme, Punkte von Botts usw. Durchgezogene Fahrbahnmarkierungen, z.B. Begrenzungen, müssen ggf. in kleinere Segmente unterteilt werden, wenn sie zu lang sind und damit das Sichtfeld des Sensors deutlich übersteigen. Dann können diese kleineren Segmente mit den vorgeschlagenen Ansätzen auf ihre Existenz überprüft werden. Daher wird jedem Segment einer (durchgehenden) festen Fahrbahnbegrenzung eine Existenzwahrscheinlichkeit zugeordnet.

Als Nebenprodukt der Verwendung des RFS-Ansatzes, der sich auf einen (Multi-) Bernoulli-Filter stützt, kann die Wahrscheinlichkeit berechnet werden, dass eine Messung nicht Teil eines bereits existierenden Objekts ist. Diese Information ist ein perfekter Indikator für ein potenziell neues Kartenelement. Somit werden daher zusätzlich Messungen weitergeleitet, die mit hoher Wahrscheinlichkeit zu keinem bekannten Kartenelement gehören, um die Argumentation für neue Kartenelemente zu ermöglichen. Diese Messungen können auch dazu verwendet werden, neue Kartenelemente zu erstellen und in den folgenden Schritten des Kartenplausibilitätsverfahrens ebenfalls zu aktualisieren.

Nach einer bevorzugten Ausführungsform wird die Existenzwahrscheinlichkeit mit einem Anfangswert von 50% initialisiert.

Vorzugsweise ist der Anfangswert vorher festgelegt. Weiter vorzugsweise wird der Anfangswert für jedes Kartenelement dynamisch bestimmt. Zum Bestimmen des Anfangswerts wird beispielsweise eine vorher festgelegte Tendenz der Existenzwahrscheinlichkeit abhängig von Eigenschaften des Kartenelements und/oder der Kartendaten bestimmt. Zum Beispiel werden die Kartenelemente des Typs Straßenschild mit einer geringeren Anfangswahrscheinlichkeit initialisiert als Kartenelemente des Typs Ampel, wenn angenommen wird, dass Straßenschilder in der Regel häufiger ausgetauscht werden als Ampeln.

Nach einer bevorzugten Ausführungsform wird das Aktualisieren der Existenzwahrscheinlichkeit des mindestens einen Kartenelements in einem zeitlichen Intervall wiederholt.

Vorzugsweise ist das zeitliche Intervall vorher festgelegt. Weiter vorzugsweise ist das zeitliche Intervall abhängig von einer Erfassungsgeschwindigkeit von mindestens einem Umgebungssensor des wenigstens teilautonomen Roboters. In anderen Worten wird die vorige Existenzwahrscheinlichkeit des mindestens einen Kartenelements aktualisiert, sobald neue Sensordaten vorliegen. Beispielsweise umfasst der Umgebungssensor des wenigstens teilautonomen Roboters eine Kamera, die 25 Bilder die Sekunde liefert. Folglich wird die vorige Existenzwahrscheinlichkeit des mindestens einen Kartenelements 25 mal pro Sekunde aktualisiert.

Erfindungsgemäß umfasst das Kartenplausibilitätsprüfungsverfahren die folgenden Schritte. Bestimmen einer Sichtbarkeit eines Kartenelements, wobei die Sichtbarkeit des Kartenelements unter Benutzung eines Sichtfeldes des Umgebungssensors und einer Verdeckung des Kartenelements bestimmt wird. Bestimmen einer Detektionswahrscheinlichkeit unter Verwendung der Sichtbarkeit des Kartenelements.

Die Sichtbarkeit eines Kartenelements prüft nicht nur das Sichtfeld des Sensors, sondern auch die Verdeckung der jeweiligen Kartenelemente.

Vorzugsweise wird die Detektionswahrscheinlichkeit unter Verwendung der Echt-positiv-Rate des Sensors bestimmt.

Darüber hinaus berücksichtigt die Sichtbarkeit die Unsicherheiten von Sensormessungen und Kartenelementen sowie die Unsicherheiten der Lokalisierungs- und Kalibrierungsinformationen über Fehlerfortpflanzung. Die Sichtbarkeitsinformationen können dann in eine Erkennungs- bzw. Detektionswahrscheinlichkeit integriert werden. Die Erkennungswahrscheinlichkeit erfasst nicht nur die Sichtbarkeit eines Kartenobjekts, sondern im Allgemeinen die Wahrscheinlichkeit, dass ein Sensor oder ein Erkennungsalgorithmus eine entsprechende Messung erzeugt. Somit ist die Erkennungswahrscheinlichkeit eines nicht sichtbaren Objekts Null, während die Erkennungswahrscheinlichkeit eines vollständig sichtbaren Objekt im Allgemeinen nicht Eins ist. Der Grund dafür ist, dass ein Sensor typischerweise nicht in der Lage ist, alle sichtbaren Objekte zu erkennen. aber nur einen bestimmten Prozentsatz davon (vgl. Rate der echt-positiven Ergebnisse).

Die Sichtbarkeit von Kartenelementen wird für jeden Sensor separat geschätzt, insbesondere durch Prüfung des wahrnehmbaren Sichtfeld des Sensors und einer Verdeckung durch andere Objekte vor dem Kartenelement, z.B. durch Überprüfung der Sichtlinie vom Sensorursprung zum jeweiligen Kartenelement. Dies kann z.B. durch die Verwendung einer Stixel-Darstellung für ein Stereokamera-System erfolgen, die eine 3D-Darstellung der Umgebung liefert. Diese Darstellung kann dann verwendet werden, um zu überprüfen, ob ein solches Stixel vor dem Kartenelement liegt und es somit verdeckt. Eine Alternative stellt die Verwendung eines beschrifteten Pixelbildes einer Monokamera dar, das speziell für alle Kartenelemente am Boden verwendet werden kann. Die Grundidee besteht darin, zu überprüfen, ob die Pixel vor dem erwarteten Kartenelement als Objekt klassifiziert sind, z.B. ein Auto, ein Fußgänger, etc., um zu wissen, dass es ein Kartenelement auf dem Boden dahinter verdeckt, z.B. eine Fahrbahnmarkierung.

Die Detektionswahrscheinlichkeit eines Kartenelements wird dann nicht nur von seiner geschätzten Sichtbarkeit, sondern auch von der echt-positiv-Rate des Sensors für diesen bestimmten Kartenelementtyp abgeleitet. Die Detektionswahrscheinlichkeit beschreibt, wie wahrscheinlich es ist, dass ein Kartenelement eine entsprechende Sensormessung erzeugt. Diese ist eng mit der Trefferrate in der Logit-Darstellung verknüpft und direkt in das Messmodell des RFS-Ansatzes integriert. Die Detektionswahrscheinlichkeit ist für vollständig nicht sichtbare Kartenelemente gleich Null und kleiner oder gleich Eins für vollständig sichtbare Objekte. Die Detektionswahrscheinlichkeit ist nur Eins für ein vollständig sichtbares Kartenelement und einen Sensor mit einer echt-positiv-Rate von Eins, d.h. der Sensor liefert in diesem Fall keinerlei falsch-negative Messungen.

Die echt-positiv-Rate gibt eine Prozentzahl von detektierten Kartenelementen an, in Relation zur Gesamtzahl der in der Umgebung vorhandenen Kartenelemente, beschreibt also in anderen Worten das Verhältnis aus echt-positiven Messungen zur Summe der echt-positiven und falsch-negativen Messungen.

Die Detektionswahrscheinlichkeit umfasst eine Wahrscheinlichkeit, dass ein existierendes Kartenelement eine korrespondierende Messung, also Sensordaten, generiert. Dies umfasst die Sichtbarkeit des Kartenelements und die echt-positiv-Rate des Umgebungssensors.

Nach einer bevorzugten Ausführungsform wird zum Bestimmen der Sichtbarkeit des Kartenelements die Datenunsicherheit verwendet.

Erfindungsgemäß wird eine Existenzwahrscheinlichkeit des mindestens einen Kartenelements mit einer Detektionswahrscheinlichkeit unterhalb einem vorher festgelegten Grenzwert nicht aktualisiert.

Nach einer bevorzugten Ausführungsform umfasst das Kartenplausibilitätsprüfungsverfahren den folgenden Schritt. Verifizieren einer Validität einer Existenzwahrscheinlichkeit.

Um die Validität des Plausibilitätsprüfungsverfahrens selbst zu verifizieren, werden die stochastischen Annahmen, die zur Berechnung der Existenzwahrscheinlichkeiten verwendet werden, im Rahmen einer internen Plausibilitäts- bzw. Validitätsprüfung im wenigstens teilautonomen Roboter überprüft. Diese Validitätsprüfung meldet eine statistisch signifikante Abweichung angenommener Parameter, z.B. räumliche Unsicherheit, Störungsrate und Entdeckungswahrscheinlichkeit beim RFS-basierten Ansatz oder Treffer- und Fehltrefferraten beim Logit-Ansatz, von den online geschätzten Parametern bei einem vordefinierten Signifikanzniveau. Darüber hinaus erfordert die Fehlerfortpflanzung von der Karte bis zum Sensorraum eine Linearisierung einer potentiell nichtlinearen Funktion, die ebenfalls auf starke Nichtlinearitäten in dem relevanten Bereich als Validitätsprüfung überprüft wird.

Die stochastischen und algorithmischen Annahmen, die zur Aktualisierung der Existenzwahrscheinlichkeiten verwendet werden, werden online als interne Validitäts- oder Konsistenzprüfung verifiziert. Vorzugsweise wird ein Messmodell der Umgebungssensoren auf Konsistenz überprüft. Relevante Parameter des Messmodells, z.B. die räumliche Unsicherheit von Sensormessungen, die Störungsrate des Sensors und die Detektionswahrscheinlichkeiten bei Verwendung der RFS-basierten Formulierung, werden online abgeschätzt. Anschließend wird durch die Validitätsprüfung überprüft, ob die Annahmen, die zur Berechnung der Existenzwahrscheinlichkeiten überhaupt getroffen wurden, innerhalb eines Konfidenzintervalls dieser online geschätzten Parameter liegen. Hierzu werden vorzugsweise statistische Hypothesentests durchgeführt. Vorzugsweise werden die Parameter online geschätzt. Allerdings werden diese jedoch nicht entsprechend angepasst, um wiederum eine sich selbst erfüllende Prophezeiung zu vermeiden. Daher werden die geschätzten Parameter nur gegen angenommene Parameter geprüft, um eine stochastische Abweichung zwischen den beiden zu erkennen und weiteren Modulen zu melden, dass die Plausibilitätsprüfung selbst nicht mehr plausibel ist. Dies ist eine Form der Selbsteinschätzung der Plausibilitätsprüfung selbst.

Nach einer bevorzugten Ausführungsform werden zum Verifizieren der Validität der Existenzwahrscheinlichkeit Sensordaten von verschiedenen Sensoren des wenigstens teilautonomen Roboters miteinander verglichen.

Nach einem weiteren Aspekt der Erfindung ist ein Kartenplausibilitätsprüfungssystem eingerichtet, das Kartenplausibilitätsprüfungsverfahren, wie es hier beschrieben ist, durchzuführen.

Nach einem weiteren Aspekt der Erfindung umfasst ein Verfahren zum Steuern eines wenigstens teilautonomen Roboters die Schritte. Durchführen eines Kartenplausibilitätsprüfungsverfahrens, wie es hier beschrieben ist, zum Bestimmen einer Existenzwahrscheinlichkeit von mindestens einem Kartenelement. Bestimmen einer Robotertrajektorie unter Verwendung von Sensordaten, Kartendaten, Lokalisierungsdaten und der Existenzwahrscheinlichkeit des mindestens einen Kartenelements. Steuern des wenigstens teilautonomen Roboters basierend auf der bestimmten Robotertrajektorie.

Auf diese Weise erlaubt es das Kartenplausibilitätsprüfungsverfahren, Verhaltens- und Trajektorienplanung in die Lage zu versetzen, Kartendaten sicher zu nutzen, indem die relevanten Teile der Karte mit Sensordaten, insbesondere Online-Sensordaten des wenigstens teilautonomen Roboters, bestätigt werden, bevor auf deren Anwesenheit in der Umgebung des wenigstens teilautonomen Roboters vertraut wird. Aufgrund der Ausgabe des Kartenplausibilitätsprüfungsverfahrens wird ein Verhaltensplanungsmodul wissen, welche Kartenelemente mit Sensordaten bestätigt werden, welche Kartenelemente z.B. aufgrund von Verdeckung unbekannt sind und welche Kartenelemente nicht mehr existieren. Das Kartenplausibilitätsprüfungsverfahren bietet somit eine ganzheitliche Betrachtung, genaue und vor allem aktuelle Darstellung der Umgebung des wenigstens teilautonomen Roboters auf der Grundlage von fusionierten Sensor- und Kartendaten.

Folgende Beispiele verdeutlichen die Verhaltensplanung:

### Beispiel 1

Ein Fahrzeug nähert sich einer Kreuzung, an der eine Ampel fehlt, die nicht verdeckt wäre, wenn es sie noch gäbe. Die Existenzwahrscheinlichkeit wird langsam von 50% auf 0% sinken, wenn sich das Fahrzeug der fehlenden Ampel nähert. Die Verhaltensgenerierung würde das Fahrzeug schon recht früh verlangsamen, um auf die abnehmende Existenzwahrscheinlichkeit zu reagieren und schließlich sicher zum Stehen zu kommen, wenn die Ampel in der Karte sicherheitskritisch ist, um nicht in die Kreuzung einzufahren, während man sich auf veraltete Kartendaten verlässt.

### Beispiel 2

Das Fahrzeug nähert sich einer Kreuzung, an der eine Ampel verdeckt ist. Die Verhaltensgenerierung würde das Fahrzeug wieder verlangsamen und/oder um das Objekt herumfahren, das die Ampel verdeckt, wenn möglich. Die Idee dabei ist, mehr Informationen über die Existenz der Ampel zu sammeln. Wenn es nicht möglich ist, die Ampel zu sehen, und wenn es sicherheitskritisch ist, würde das Fahrzeug vor der Kreuzung anhalten.

### Beispiel 3

Das Fahrzeug nähert sich einer Kreuzung mit einer deutlich sichtbaren Ampel. Die Existenzwahrscheinlichkeit der Ampel wird langsam von 50% auf 100% steigen, wenn sich das Fahrzeug der Kreuzung nähert. Da das Fahrzeug nun in der Lage ist, die Ampel und auch ihren Zustand wahrzunehmen, muss es nicht langsamer werden, um die Kreuzung sicher zu überqueren.

Nach einer bevorzugten Ausführungsform umfasst das Verfahren zum Steuern eines wenigstens teilautonomen Roboters den folgenden Schritt. Bestimmen eines Steuerungsmodus unter Verwendung der Sensordaten, der Kartendaten, der Lokalisierungsdaten und der Existenzwahrscheinlichkeit des mindestens einen Kartenelements und Steuern des wenigstens teilautonomen Roboters basierend auf dem bestimmten Steuerungsmodus.

Vorzugsweise umfasst der Steuerungsmodus vordefinierte Verhaltenseigenschaften des wenigstens teilautonomen Roboters. Der Steuerungsmodus umfasst beispielsweise den Modus "normale Fahrt", "präventive Sicherheit" und/oder "Sicherheitsstop". Abhängig von dem Steuerungsmodus wird der wenigstens teilautonome Roboter bei gleichen Eingangsdaten, also Sensordaten, Kartendaten und/oder Lokalisierungsdaten, unterschiedlich gesteuert.

Vorzugsweise umfasst ein Computerprogramm Befehle, die bei der Ausführung des Computerprogramms durch einen Computer diesen veranlassen, ein Kartenplausibilitätsprüfungsverfahren, wie es hier beschrieben ist, auszuführen.

Vorzugsweise ist auf einem maschinenlesbaren Speichermedium das Computerprogramm, wie es hier beschrieben ist, gespeichert.

Vorteilhafterweise werden die Kartendaten, die das mindestens eine Kartenelement umfassen, von einem entfernten Server empfangen und das Ergebnis des Kartenplausibilitätsprüfungsverfahren wird vorteilhafterweise zum entfernten Server übertragen und dort einer Entscheidung zugrunde gelegt, ob eine Aktualisierung des mindesten einen Kartenelements oder eine Kartenneuvermessung am Ort des mindestens einen Kartenelements ausgelöst werden soll. Bei dem Ergebnis des Kartenplausibilitätsprüfungsverfahren handelt es sich insbesondere um die aktualisierte Existenzwahrscheinlichkeit des mindestens einen Kartenelements oder um eine hieraus abgeleitete Information, die angibt, ob die Existenz des mindestens einen Kartenelements bestätigt wird, widerlegt wird oder ob keine Aussage über seine Existenz getroffen werden kann.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:

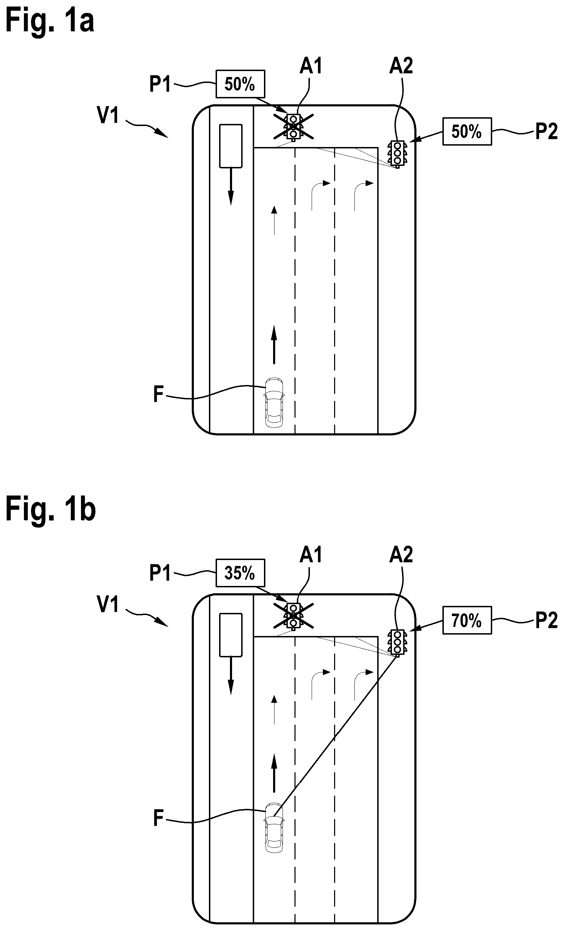

- Figur 1a: ein Kartenplausibilitätsprüfungsverfahren nach einer ersten Ausführungsform in einem ersten Zeitschritt;
- Figur 1: b ein Kartenplausibilitätsprüfungsverfahren nach einer ersten Ausführungsform in einem zweiten Zeitschritt;
- Figur 1c: ein Kartenplausibilitätsprüfungsverfahren nach einer ersten Ausführungsform in einem dritten Zeitschritt;
- Figur 2: eine schematische Darstellung eines Kartenplausibilitätsprüfungsverfahrens
- Figur 3a: ein Kartenplausibilitätsprüfungsverfahren nach einer zweiten Ausführungsform in einem ersten Zeitschritt;
- Figur 3b: ein Kartenplausibilitätsprüfungsverfahren nach einer zweiten Ausführungsform in einem zweiten Zeitschritt;
- Figur 3c: ein Kartenplausibilitätsprüfungsverfahren nach einer zweiten Ausführungsform in einem dritten Zeitschritt; und
- Figur 4: ein Kartenplausibilitätsprüfungssystem.

Figur 1a zeigt eine erste Verkehrssituation V1 in einem ersten Zeitschritt. Ein wenigstens teilautonomer Roboter, in diesem Fall ein zumindest teilweise automatisiert fahrendes Fahrzeug, steuert auf eine Kreuzung zu. Aus den Kartendaten einer hochgenauen (HD-) Karte sind zwei Kartenelemente, eine erste Ampel A1 und eine zweite Ampel A2, zu entnehmen. In diesem Fall, wurde die erste Ampel A1 allerdings aufgrund von Bauarbeiten entfernt. Insofern sind die Kartendaten bezüglich der ersten Ampel A1 veraltet. Gemäß des Kartenplausibilitätsprüfungsverfahrens wird für die erste Ampel A1 und die zweite Ampel A2 eine erste Existenzwahrscheinlichkeit P1 und eine zweite Existenzwahrscheinlichkeit P2 mit einem Wert von 50% initialisiert. In diesem ersten Zeitschritt ist das Fahrzeug F noch vergleichsweise weit von der Kreuzung entfernt. Die Sensordaten, die von Umgebungssensoren des Fahrzeugs F zur Verfügung gestellt werden, weisen weder ein erfasstes Element zu der ersten Ampel A1 noch zu der zweiten Ampel A2 auf. In dem ersten Zeitschritt wird eine Plausibilitätsprüfung durchgeführt, bei der die erste Existenzwahrscheinlichkeit P1 und die zweite Existenzwahrscheinlichkeit P2 aktualisiert wird. In der Plausibilitätsprüfung wird aufgrund von internen Statistiken und Lokalisierungsdaten des Fahrzeugs F festgestellt, dass das Fahrzeug F noch so weit von der Kreuzung entfernt ist, dass die Umgebungssensoren des Fahrzeugs F weder die erste Ampel A1 noch die zweite Ampel A2 erfassen können. In anderen Worten, befinden sich die erste Ampel A1 und die zweite Ampel A2 nicht im Sichtbereich der Umgebungssensoren des Fahrzeugs F. Somit wird bestimmt, dass aufgrund der Sensordaten keine weitere Aussage über die erste Existenzwahrscheinlichkeit P1 und die zweite Existenzwahrscheinlichkeit P2 getroffen werden kann. Insofern bleibt die erste Existenzwahrscheinlichkeit P1 bei 50% und die zweite Existenzwahrscheinlichkeit P2 bei 50%. Für das Steuern des zumindest teilweise automatisiert fahrenden Fahrzeugs wird basierend auf dem ausreichenden Abstand des Fahrzeugs F zu der Kreuzung entschieden, mit normaler Geschwindigkeit weiterzufahren. Ein Steuerungsmodus des Fahrzeugs ist in diesem Fall "normale Fahrt".

Figur 1b zeigt die erste Verkehrssituation V1 in einem zweiten Zeitschritt. Das zumindest teilweise automatisiert fahrendes Fahrzeug F befindet sich näher an der Kreuzung als im ersten Zeitschritt. In dem zweiten Zeitschritt wird eine Plausibilitätsprüfung durchgeführt, bei der die erste Existenzwahrscheinlichkeit P1 und die zweite Existenzwahrscheinlichkeit P2 aktualisiert wird. In der Plausibilitätsprüfung wird aufgrund von internen Statistiken und den Lokalisierungsdaten des Fahrzeugs F festgestellt, dass das Fahrzeug F bereits so nahe der Kreuzung ist, dass die Umgebungssensoren des Fahrzeugs F sowohl die erste Ampel A1 als auch die zweite Ampel A2 erfassen können müsste. In anderen Worten, befinden sich die erste Ampel A1 und die zweite Ampel A2 im Sichtbereich der Umgebungssensoren des Fahrzeugs F. Somit wird bestimmt, dass aufgrund der Sensordaten eine Aussage über die erste Existenzwahrscheinlichkeit P1 und die zweite Existenzwahrscheinlichkeit P2 getroffen werden kann. Da die erste Ampel A1, wie beschrieben, nicht mehr existent ist, erfassen die Umgebungssensoren des Fahrzeugs F auch kein Element an der erwarteten Stelle aus den Kartendaten. Dahingegen befindet sich die zweite Ampel A2 noch an der zu erwartenden Stelle aus den Kartendaten Insofern wird die erste Existenzwahrscheinlichkeit P1 von 50% auf 35% reduziert und die zweite Existenzwahrscheinlichkeit P2 von 50% auf 70% erhöht. Für das Steuern des zumindest teilweise automatisiert fahrenden Fahrzeugs wird basierend auf der ersten Existenzwahrscheinlichkeit P1 und der zweiten Existenzwahrscheinlichkeit P2 entschieden, das Fahrzeug F leicht zu verzögern, damit mehr Zeit zum Messen der Umgebung bleibt, um weitere Aussagen insbesondere zu der ersten Ampel A1 treffen zu können. Der Steuerungsmodus des Fahrzeugs F ändert sich hierbei von "normale Fahrt" auf "präventive Sicherheit".

In diesem Fall wurde in der Plausibilitätsprüfung ein Unterschied in der ersten Ampel A1 zwischen den Sensordaten und den Kartendaten festgestellt. Wäre die erste Ampel A1 ebenfalls von den Umgebungssensoren des Fahrzeugs F erfasst worden, wäre eine erste Existenzwahrscheinlichkeit P1 von 50% auf 70% erhöht worden und der Steuerungsmodus des Fahrzeugs F wäre bei "normale Fahrt" unverändert geblieben.

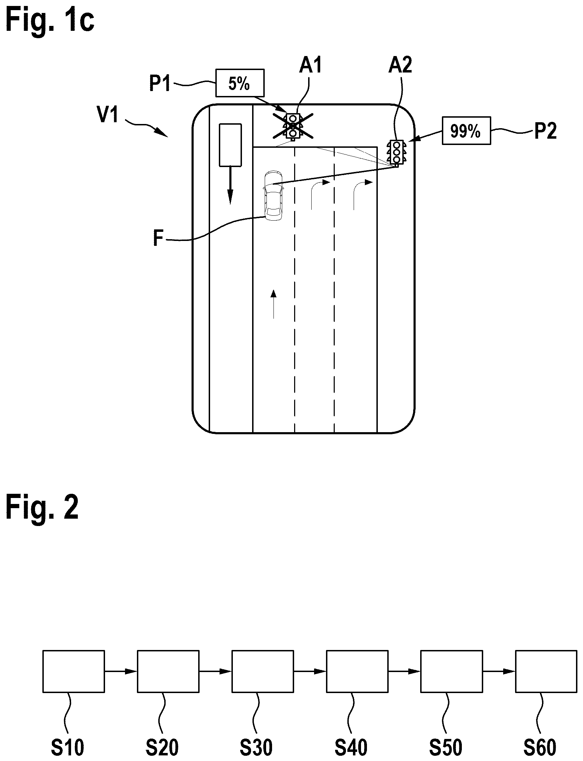

Figur 1c zeigt die erste Verkehrssituation V1 in einem dritten Zeitschritt. Das zumindest teilweise automatisiert fahrendes Fahrzeug F befindet sich näher an der Kreuzung als im zweiten Zeitschritt. In dem dritten Zeitschritt wird eine Plausibilitätsprüfung durchgeführt, bei der die erste Existenzwahrscheinlichkeit P1 und die zweite Existenzwahrscheinlichkeit P2 aktualisiert wird. In der Plausibilitätsprüfung wird aufgrund von internen Statistiken und den Lokalisierungsdaten des Fahrzeugs F festgestellt, dass das Fahrzeug F weiterhin so nahe der Kreuzung ist, dass die Umgebungssensoren des Fahrzeugs F sowohl die erste Ampel A1 als auch die zweite Ampel A2 erfassen können müsste. In anderen Worten, befinden sich die erste Ampel A1 und die zweite Ampel A2 im Sichtbereich der Umgebungssensoren des Fahrzeugs F. Somit wird bestimmt, dass aufgrund der Sensordaten eine Aussage über die erste Existenzwahrscheinlichkeit P1 und die zweite Existenzwahrscheinlichkeit P2 getroffen werden kann. Da die erste Ampel A1, wie beschrieben, nicht mehr existent ist, erfassen die Umgebungssensoren des Fahrzeugs F auch weiterhin kein Element an der erwarteten Stelle aus den Kartendaten. Dahingegen befindet sich die zweite Ampel A2 noch an der zu erwartenden Stelle aus den Kartendaten Insofern wird die erste Existenzwahrscheinlichkeit P1 von 35% auf 5% reduziert und die zweite Existenzwahrscheinlichkeit P2 von 70% auf 99% erhöht. Für das Steuern des zumindest teilweise automatisiert fahrenden Fahrzeugs wird basierend auf der ersten Existenzwahrscheinlichkeit P1 und der zweiten Existenzwahrscheinlichkeit P2 entschieden, das Fahrzeug F vor der Kreuzung sicher zum Stehen gebracht werden soll, da mit einer hohen Wahrscheinlichkeit durch das Fehlen der ersten Ampel A1 eine mögliche kritische Situation entstanden ist. Der Steuerungsmodus des Fahrzeugs F ändert sich hierbei von "präventive Sicherheit" auf "Sicherheitsstop". In dieser Situation, wird eine Tele-Bedienung des Fahrzeugs F von einer Überwachungszentrale angefordert, durch die die Verkehrssituation für das Fahrzeug F manuell gelöst werden soll. Des Weiteren wird ein Aktualisieren der Kartendaten, oder ein Neuvermessen der Kreuzung angestoßen.

Figur 2 zeigt ein Kartenplausibilitätsprüfungsverfahren, umfassend folgende Schritte. In einem ersten Schritt S10 werden Sensordaten eines Fahrzeugs empfangen, die mindestens ein erfasstes Element abbilden, wobei das mindestens eine erfasste Elemente ein Umgebungselement des Fahrzeugs, wie es von einem Umgebungssensor des Fahrzeugs erfasst wird, darstellt. In einem zweiten Schritt S20 werden Kartendaten empfangen, die eine Karte mit mindestens einem Kartenelement abbilden, wobei das mindestens eine Kartenelement ein Umgebungselement des Fahrzeugs, wie es auf einer vorher festgelegten Karte eingetragen ist, darstellt. In einem dritten Schritt S30 werden Lokalisierungsdaten aus den empfangenen Sensordaten bestimmt, wobei die Lokalisierungsdaten eine Position des Fahrzeugs auf der Karte angeben. In einem vierten Schritt S40, wird eine Datenunsicherheit bestimmt, wobei die Datenunsicherheit eine Sensordatenunsicherheit, eine Kartendatenunsicherheit und/oder eine Lokalisierungsdatenunsicherheit umfasst. In einem fünften Schritt S50, wird eine Existenzwahrscheinlichkeit für das mindestens eine Kartenelement initialisiert. In einem sechsten Schritt S60 wird die Existenzwahrscheinlichkeit des mindestens einen Kartenelements unter Verwendung der Kartendaten, Sensordaten, Lokalisierungsdaten und Datenunsicherheiten aktualisiert.

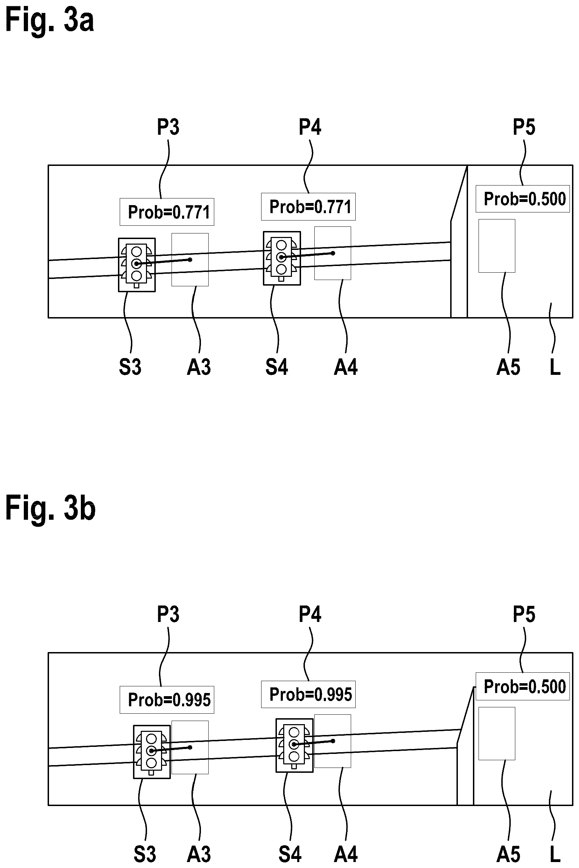

Figur 3a zeigt eine zweite Verkehrssituation V2 in einem ersten Zeitschritt.

Das zumindest teilweise automatisiert fahrendes Fahrzeug F befindet nahe einer Kreuzung. Aus den Kartendaten einer hochgenauen (HD-)Karte sind drei Kartenelemente, eine dritte Ampel A3, eine vierte Ampel A4 und eine fünfte Ampel A5, zu entnehmen. In diesem Fall, sind die dritte Ampel A3, die vierte Ampel A4 und die fünfte Ampel A5 auch tatsächlich noch vorhanden. Insofern sind die Kartendaten aktuell.

Allerdings ergeben sich aus den Sensordaten lediglich ein drittes erfasstes Element S3, das der dritten Ampel A3 zugeordnet werden kann, und ein viertes erfasstes Element S4, das der vierten Ampel A4 zugeordnet werden kann.

Gemäß des Kartenplausibilitätsprüfungsverfahrens wird für die dritte Ampel A3, die vierte Ampel A4 und die fünfte Ampel A5 eine dritte Existenzwahrscheinlichkeit P3, eine vierte Existenzwahrscheinlichkeit P4 und eine fünfte Existenzwahrscheinlichkeit P5 mit einem Wert von 50% initialisiert. In dem ersten Zeitschritt wird eine Plausibilitätsprüfung durchgeführt, bei der die dritte Existenzwahrscheinlichkeit P3, die vierte Existenzwahrscheinlichkeit P4 und die fünfte Existenzwahrscheinlichkeit P5 aktualisiert wird. In der Plausibilitätsprüfung wird aufgrund von internen Statistiken und Lokalisierungsdaten des Fahrzeugs F festgestellt, dass das Fahrzeug F so nahe an der Kreuzung ist, dass die Umgebungssensoren des Fahrzeugs F die dritte Ampel A3, die vierte Ampel A4 und die fünfte Ampel A5 erfassen können müsste. Allerdings ergeben die Sensordaten des Fahrzeugs F auch, dass sich in der Nähe des Fahrzeugs F ein Lastkraftwagen L, LKW, befindet, der sich im Sichtbereich zwischen den Umgebungssensoren des Fahrzeugs F und der fünften Ampel A5 befindet. In anderen Worten, befinden sich die dritte Ampel A3 und die vierte Ampel A4 im Sichtbereich der Umgebungssensoren des Fahrzeugs F und die fünfte Ampel A5 nicht im Sichtbereich der Umgebungssensoren des Fahrzeugs F. Somit wird bestimmt, dass keine weitere Aussage über die fünfte Existenzwahrscheinlichkeit P5 getroffen werden kann, jedoch über die dritte Existenzwahrscheinlichkeit P3 und die vierte Existenzwahrscheinlichkeit P4. Insofern bleibt in dem ersten Zeitschritt die fünfte Existenzwahrscheinlichkeit P5 bei 50% und die dritte Existenzwahrscheinlichkeit P3 und die vierte Existenzwahrscheinlichkeit P4 wird von 50% auf 77,1% erhöht.

Figur 3b zeigt die zweite Verkehrssituation V2 in einem zweiten Zeitschritt.

Aus den Sensordaten ergeben sich weiterhin lediglich ein drittes erfasstes Element S3, das der dritten Ampel A3 zugeordnet werden kann, und ein viertes erfasstes Element S4, das der vierten Ampel A4 zugeordnet werden kann.

In dem zweiten Zeitschritt wird eine Plausibilitätsprüfung durchgeführt, bei der die dritte Existenzwahrscheinlichkeit P3, die vierte Existenzwahrscheinlichkeit P4 und die fünfte Existenzwahrscheinlichkeit P5 aktualisiert wird. In der Plausibilitätsprüfung wird aufgrund von internen Statistiken und Lokalisierungsdaten des Fahrzeugs F festgestellt, dass das Fahrzeug F weiterhin so nahe an der Kreuzung ist, dass die Umgebungssensoren des Fahrzeugs F die dritte Ampel A3, die vierte Ampel A4 und die fünfte Ampel A5 erfassen können müsste. Allerdings ergeben die Sensordaten des Fahrzeugs F auch weiterhin , dass sich in der Nähe des Fahrzeugs F ein Lastkraftwagen L, LKW, befindet, der sich im Sichtbereich zwischen den Umgebungssensoren des Fahrzeugs F und der fünften Ampel A5 befindet. In anderen Worten, befinden sich weiterhin die dritte Ampel A3 und die vierte Ampel A4 im Sichtbereich der Umgebungssensoren des Fahrzeugs F und die fünfte Ampel A5 nicht im Sichtbereich der Umgebungssensoren des Fahrzeugs F. Somit wird bestimmt, dass keine weitere Aussage über die fünfte Existenzwahrscheinlichkeit P5 getroffen werden kann, jedoch über die dritte Existenzwahrscheinlichkeit P3 und die vierte Existenzwahrscheinlichkeit P4. Insofern bleibt in dem zweiten Zeitschritt die fünfte Existenzwahrscheinlichkeit P5 bei 50% und die dritte Existenzwahrscheinlichkeit P3 und die vierte Existenzwahrscheinlichkeit P4 werden jeweils von 77,1% auf 99,5% erhöht.

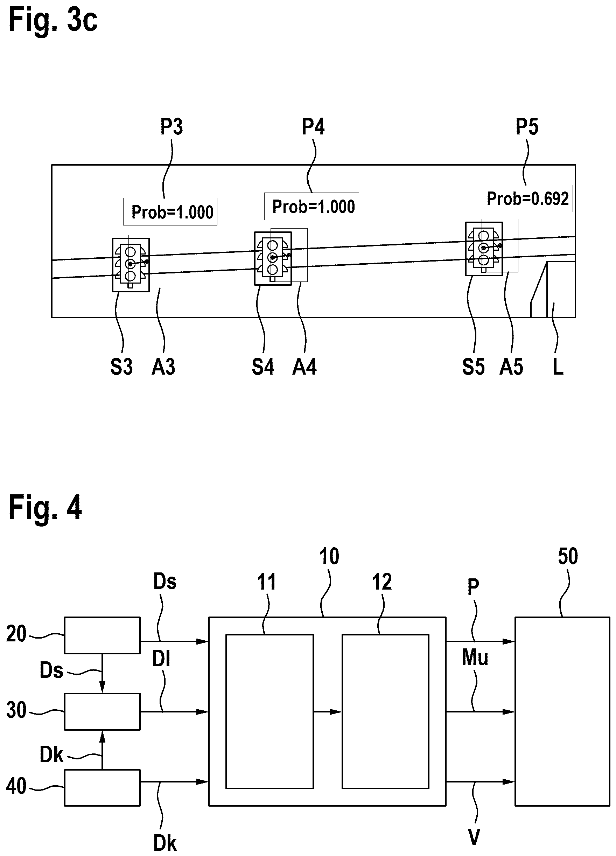

Figur 3c zeigt die zweite Verkehrssituation V2 in einem dritten Zeitschritt.

Aus den Sensordaten ergeben sich jetzt ein drittes erfasstes Element S3, das der dritten Ampel A3 zugeordnet werden kann, ein viertes erfasstes Element S4, das der vierten Ampel A4 zugeordnet werden kann, und ein fünftes erfasstes Element S5, das der fünften Ampel A5 zugeordnet werden kann.

In dem dritten Zeitschritt wird eine Plausibilitätsprüfung durchgeführt, bei der die dritte Existenzwahrscheinlichkeit P3, die vierte Existenzwahrscheinlichkeit P4 und die fünfte Existenzwahrscheinlichkeit P5 aktualisiert wird. In der Plausibilitätsprüfung wird aufgrund von internen Statistiken und Lokalisierungsdaten des Fahrzeugs F festgestellt, dass das Fahrzeug F weiterhin so nahe an der Kreuzung ist, dass die Umgebungssensoren des Fahrzeugs F die dritte Ampel A3, die vierte Ampel A4 und die fünfte Ampel A5 erfassen können müsste. Außerdem ergeben die Sensordaten des Fahrzeugs F auch, dass sich der in der Nähe des Fahrzeugs F befindliche Lastkraftwagen L, nicht mehr im Sichtbereich zwischen den Umgebungssensoren des Fahrzeugs F und der fünften Ampel A5 befindet. In anderen Worten, befinden sich die dritte Ampel A3, die vierte Ampel A4 und die fünfte Ampel im Sichtbereich der Umgebungssensoren des Fahrzeugs F. Somit wird bestimmt, dass eine Aussage über die fünfte Existenzwahrscheinlichkeit P5, die dritte Existenzwahrscheinlichkeit P3 und die vierte Existenzwahrscheinlichkeit P4 getroffen werden kann. Insofern erhöht sich in dem dritten Zeitschritt die fünfte Existenzwahrscheinlichkeit P5 von 50% auf 69,5% und die dritte Existenzwahrscheinlichkeit P3 und die vierte Existenzwahrscheinlichkeit P4 wird von 99,5% auf 100% erhöht.

Figur 4 zeigt ein Kartenplausibilitätsprüfungssystem 10, umfassend eine Objektzuordnungseinheit 11 und eine Objektfusionseinheit 12. Das Kartenplausibilitätsprüfungssystem 10 ist als Eingang verbunden mit einem Sensorsystem 20, einem Lokalisierungssystem 30 und einem Kartensystem 40. Weiter ist das Kartenplausibilitätsprüfungssystem 10 als Ausgang verbunden mit einem Verhaltensplanungssystem 50.

Das Sensorsystem 20 stellt Sensordaten Ds bereit. Das Kartensystem 40 stellt Kartendaten Dk bereit. Aus den Sensordaten Ds und den Kartendaten Dk bestimmt das Lokalisierungssystem 30 Lokalisierungsdaten Dl. Die Sensordaten Ds, die Kartendaten Dk und die Lokalisierungsdaten Dl werden dem Kartenplausibilitätsprüfungssystem 10, insbesondere der Objektzuordnungseinheit 11 zur Verfügung gestellt.

Die Objektzuordnungseinheit 11 ist spezifisch für den Sensortyp und wird für jeden Sensor einmal instanziiert. Die Objektzuordnungseinheit 11 ist eingerichtet, Kartenelemente auf das jeweilige Sensorraum, z.B. in das Kamerakoordinatensystem, zu projizieren und ist eingerichtet die Sichtbarkeit der Kartenelemente in dem Sensorraum abzuschätzen, z.B. auf der Grundlage von Stixeln, die die Sichtlinie zu diesen Kartenelementen potenziell blockieren. Die Objektzuordnungseinheit 11 ist ferner eingerichtet die k besten Zuordnungen mit Hilfe einer probabilistischen Formulierung der Sensordaten und eines Ranked-Assignment-Algorithmus, z.B. mit dem Murty'schen Algorithmus, zu berechnen. Die Objektzuordnung wird aus der eigentlichen Kartenplausibilitätsprüfung ausgelagert, da sie nicht spezifisch für die Karte ist und ihr Ergebnis von anderen Modulen, z.B. Lokalisierung, verwendet werden könnte. Die Objektzuordnungseinheit 11 ist somit eingerichtet zum Projizieren der Kartenelemente in das Sensorraum, oder in anderen Worten in das Sensorkoordinatensystem, zum Bestimmen, insbesondere Schätzen der Sichtbarkeit der Kartenelemente und zum Zuordnen der Sensordaten, also von Sensormessungen, zur Abbildung von Kartenelementen im Sensorraum.

Die Objektfusionseinheit 12 ist eingerichtet die Existenzwahrscheinlichkeit des Kartenelements zu aktualisieren und optional auch die Position des Kartenelements zu aktualisieren. Außerdem ist die Objektfusionseinheit 12 eingerichtet, die Sensordaten, also die Sensormessungen, zu identifizieren, die zu keinem bestehenden Kartenelement zugeordnet sind und somit potentiell neue Kartenelemente zu identifizieren. Die Objektfusionseinheit 12 ist eingerichtet eine Korrektheit von algorithmischen / stochastischen Annahmen zu überprüfen, also eine Validität der Existenzwahrscheinlichkeit zu überprüfen.

Das Kartenplausibilitätsprüfungssystem 10 stellt folglich dem Verhaltensplanungssystem 50 Kartenelemente mit Existenzwahrscheinlichkeiten P, nicht zugeordnete Messungen Mu und Validitätsprüfungsergebnisse V zur Verfügung. Das Verhaltensplanungssystem 50 steuert folglich ein Verhalten des zumindest teilweise automatisiert fahrenden Fahrzeugs basierend auf den bereitgestellten Daten.

## Patentansprüche

1. Kartenplausibilitätsprüfungsverfahren, umfassend die Schritte:
Empfangen (S10) von Sensordaten eines wenigstens teilautonomen Roboters (F), die mindestens ein erfasstes Element (S3, S4, S5) abbilden, wobei das mindestens eine erfasste Element (S3, S4, S5) ein Umgebungselement des wenigstens teilautonomen Roboters (F), wie es von einem Umgebungssensor des wenigstens teilautonomen Roboters (F) erfasst wird, darstellt;
Empfangen (S20) von Kartendaten (Dk), die eine Karte mit mindestens einem Kartenelement (A3, A4, A5) abbilden, wobei das mindestens eine Kartenelement (A3, A4, A5) ein Umgebungselement des wenigstens teilautonomen Roboters (F), wie es auf einer vorher festgelegten Karte eingetragen ist, darstellt;
Empfangen (S30) von Lokalisierungsdaten (Dl), wobei die Lokalisierungsdaten (DI) eine Position des wenigstens teilautonomen Roboters (F) auf der Karte angeben;
Bestimmen (S40) einer Datenunsicherheit, wobei die Datenunsicherheit eine Sensordatenunsicherheit, eine Kartendatenunsicherheit und eine Lokalisierungsdatenunsicherheit umfasst;
Projizieren des mindestens einen Kartenelements (A3, A4, A5) in einen Sensorraum des Umgebungssensors;
Bestimmen einer Sichtbarkeit eines Kartenelements (A3, A4, A5), wobei die Sichtbarkeit des Kartenelements (A3, A4, A5) unter Benutzung eines Sichtfeldes des Umgebungssensors und einer Verdeckung des Kartenelements (A3, A4, A5) bestimmt wird;
Bestimmen einer Detektionswahrscheinlichkeit unter Verwendung der Sichtbarkeit des Kartenelements (A3, A4, A5);
Initialisieren (S50) einer Existenzwahrscheinlichkeit (P) für das mindestens eine Kartenelement (A3, A4, A5) mit einem vorgegebenen Anfangswert;
Aktualisieren (S60) der Existenzwahrscheinlichkeit (P) des mindestens einen Kartenelements (A3, A4, A5) unter Verwendung der Kartendaten (Dk), der Sensordaten (Ds), der Lokalisierungsdaten (DI) und der Datenunsicherheiten; wobei eine Existenzwahrscheinlichkeit (P3, P4, P5) des mindestens einen Kartenelements (A3, A4, A5) mit einer Detektionswahrscheinlichkeit unterhalb einem vorher festgelegten Grenzwert nicht aktualisiert wird; wobei die aktualisierte Existenzwahrscheinlichkeit des mindestens einen Kartenelements angibt, ob die Existenz des mindestens einen Kartenelements bestätigt wird, widerlegt wird oder ob keine Aussage über seine Existenz getroffen werden kann.

2. Kartenplausibilitätsprüfungsverfahren gemäß Anspruch 1, wobei die Existenzwahrscheinlichkeit (P) für das mindestens eine Kartenelement (A3, A4, A5) mit einem Anfangswert von 50% initialisiert wird.

3. Kartenplausibilitätsprüfungsverfahren gemäß einem der voranstehenden Ansprüche, umfassend den Schritt:
Zuordnen des mindestens einen Kartenelements (A3, A4, A5) zu dem mindestens einen erfassten Element (S3, S4, S5).

4. Verfahren gemäß einem der voranstehenden Ansprüche, umfassen den Schritt:
Evaluieren der Existenzwahrscheinlichkeit (P3, P4, P5) des mindestens einen Kartenelements (A3, A4, A5);
wobei das Evaluieren eines der Ergebnisse Bestätigen des Kartenelements, Widerlegen des Kartenelements, potentiell neues Kartenelement und keine mögliche Aussage, umfasst.

5. Verfahren gemäß einem der voranstehenden Ansprüche,
wobei das Aktualisieren der Existenzwahrscheinlichkeit (P3, P4, P5) einen Random-Finite-Set-(RFS)-Ansatz oder einen Logit-Ansatz umfasst.

6. Verfahren gemäß einem der voranstehenden Ansprüche,
wobei das Aktualisieren der Existenzwahrscheinlichkeit (P3, P4, P5) des mindestens einen Kartenelements (A3, A4, A5) in einem zeitlichen Intervall wiederholt wird.

7. Verfahren gemäß einem der voranstehenden Ansprüche,
wobei zum Bestimmen der Sichtbarkeit des Kartenelements (A3, A4, A5) die Datenunsicherheit verwendet wird.

8. Verfahren gemäß einem der voranstehenden Ansprüche,
Verifizieren einer Validität der Existenzwahrscheinlichkeit (P3, P4, P5).

9. Verfahren gemäß Anspruch 8,
wobei zum Verifizieren der Validität der Existenzwahrscheinlichkeit (P3, P4, P5) Sensordaten (Ds) von verschiedenen Sensoren des wenigstens teilautonomen Roboters (F) miteinander verglichen werden.

10. Kartenplausibilitätsprüfungssystem (10), das eingerichtet ist, das Verfahren nach einem der Ansprüche 1-9 durchzuführen.

11. Verfahren zum Steuern eines wenigstens teilautonomen Roboters, umfassend die Schritte:
Durchführen eines Kartenplausibilitätsprüfungsverfahrens nach einem der Ansprüche 1 bis 9 zum Bestimmen einer Existenzwahrscheinlichkeit von mindestens einem Kartenelement;
Bestimmen einer Robotertrajektorie unter Verwendung von Sensordaten (Ds), Kartendaten (Dk), der Lokalisierungsdaten (DI) und der Existenzwahrscheinlichkeit (P3, P4, P5) des mindestens einen Kartenelements (A3, A4, A5);
Steuern des wenigstens teilautonomen Roboters basierend auf der bestimmten Robotertrajektorie.

12. Verfahren nach Anspruch 11, umfassend die Schritte:
Bestimmen eines Steuerungsmodus unter Verwendung der Sensordaten (Ds), der Kartendaten (Dk), der Lokalisierungsdaten (DI) und der Existenzwahrscheinlichkeit (P3, P4, P5) des mindestens einen Kartenelements (A3, A4, A5);
Steuern des wenigstens teilautonomen Roboters basierend auf dem bestimmten Steuerungsmodus.

## Claims

1. A map plausibility checking method comprising the steps of:
Receiving (S10) sensor data from at least one partially autonomous robot (F), which data maps at least one detected element (S3, S4, S5), wherein the at least one detected element (S3, S4, S5) represents an environmental element of the at least partially autonomous robot (F) as detected by an environmental sensor of the at least partially autonomous robot (F);
Receiving (S20) map data (Dk) representing a map with at least one map element (A3, A4, A5), wherein the at least one map element (A3, A4, A5) represents an environmental element of the at least partially autonomous robot (F) as entered on a predetermined map;
receiving (S30) localisation data (DI), wherein the localisation data (DI) indicate a position of the at least partially autonomous robot (F) on the map;
determining (S40) a data uncertainty, wherein the data uncertainty comprises a sensor data uncertainty, a map data uncertainty and a localisation data uncertainty;
projecting the at least one map element (A3, A4, A5) into a sensor space of the environment sensor;
determining a visibility of a map element (A3, A4, A5), wherein the visibility of the map element (A3, A4, A5) is determined using a field of view of the environment sensor and an occlusion of the map element (A3, A4, A5);
determining a detection probability using the visibility of the map element (A3, A4, A5);
initialising (S50) an existence probability (P) for the at least one map element (A3, A4, A5) with a predetermined initial value;
Updating (S60) the existence probability (P) of the at least one map element (A3, A4, A5) using the map data (Dk), the sensor data (Ds), the localisation data (DI) and the data uncertainties; wherein an existence probability (P3, P4, P5) of the at least one map element (A3, A4, A5) with a detection probability below a predetermined threshold value is not updated; wherein the updated existence probability of the at least one map element indicates whether the existence of the at least one map element is confirmed, refuted or whether no statement can be made about its existence.

2. Map plausibility checking method according to claim 1, wherein the existence probability (P) for the at least one map element (A3, A4, A5) is initialised with an initial value of 50%.

3. Map plausibility checking method according to one of the preceding claims, comprising the step of:
Assigning the at least one map element (A3, A4, A5) to the at least one detected element (S3, S4, S5).

4. Method according to one of the preceding claims, comprising the step of:
evaluating the existence probability (P3, P4, P5) of the at least one map element (A3, A4, A5);
wherein evaluating comprises one of the results confirming the map element, refuting the map element, potentially new map element, and no possible statement.

5. Method according to any of the preceding claims,
wherein updating the existence probability (P3, P4, P5) comprises a random finite set (RFS) approach or a logit approach.

6. Method according to one of the preceding claims,
wherein updating the existence probability (P3, P4, P5) of the at least one map element (A3, A4, A5) is repeated at a time interval.

7. Method according to one of the preceding claims,
wherein the data uncertainty is used to determine the visibility of the map element (A3, A4, A5).

8. Method according to one of the preceding claims,
verifying a validity of the existence probability (P3, P4, P5).

9. Method according to claim 8,
wherein, in order to verify the validity of the existence probability (P3, P4, P5), sensor data (Ds) from different sensors of the at least partially autonomous robot (F) are compared with each other.

10. Map plausibility checking system (10) that is set up to carry out the method according to one of claims 1-9.

11. Method for controlling at least a partially autonomous robot, comprising the steps of:
performing a map plausibility check method according to one of claims 1 to 9 to determine an existence probability of at least one map element;
determining a robot trajectory using sensor data (Ds), map data (Dk), the localisation data (DI) and the existence probability (P3, P4, P5) of the at least one map element (A3, A4, A5);
controlling the at least partially autonomous robot based on the determined robot trajectory.

12. Method according to claim 11, comprising the steps:
determining a control mode using the sensor data (Ds), the map data (Dk), the localisation data (DI) and the existence probability (P3, P4, P5) of the at least one map element (A3, A4, A5);
controlling the at least partially autonomous robot based on the determined control mode.

## Revendications

1. Procédé de contrôle de vraisemblance de carte, comprenant les étapes consistant à :
recevoir (S10) d'un robot au moins semi-autonome (F) des données de capteur qui représentent au moins un élément détecté (S3, S4, S5), dans lequel ledit au moins un élément détecté (S3, S4, S5) représente un élément d'environnement du robot au moins semi-autonome (F) tel qu'il est détecté par un capteur d'environnement du robot au moins semi-autonome (F) ;
recevoir (S20) des données de carte (Dk) qui représentent une carte avec au moins un élément de carte (A3, A4, A5), dans lequel ledit au moins un élément de carte (A3, A4, A5) représente un élément d'environnement du robot au moins partiellement autonome (F), tel qu'il est enregistré sur une carte prédéterminée ;
recevoir (S30) des données de localisation (DI), dans lequel les données de localisation (DI) indiquent une position du robot au moins semi-autonome (F) sur la carte ;
déterminer (S40) une incertitude sur les données, dans lequel l'incertitude sur les données comprend une incertitude sur les données de capteur, une incertitude sur les données de carte, et une incertitude sur les données de localisation ;
projeter ledit au moins un élément de carte (A3, A4, A5) dans un espace de capteur du capteur d'environnement ;
déterminer une visibilité d'un élément de carte (A3, A4, A5), dans lequel la visibilité de l'élément de carte (A3, A4, A5) est déterminée à l'aide d'un champ de vision du capteur d'environnement et d'un masquage de l'élément de carte (A3, A4, A5) ;
déterminer une probabilité de détection à l'aide de la visibilité de l'élément de carte (A3, A4, A5) ;
initialiser (S50) une probabilité d'existence (P) pour ledit au moins un élément de carte (A3, A4, A5) avec une valeur initiale prédéfinie ;
mettre à jour (S60) la probabilité d'existence (P) dudit au moins un élément de carte (A3, A4, A5) à l'aide des données de carte (Dk), des données de capteur (Ds), les données de localisation (DI), et des incertitudes sur les données ; dans lequel une probabilité d'existence (P3, P4, P5) dudit au moins un élément de la carte (A3, A4, A5) ayant une probabilité de détection en dessous d'une valeur limite prédéterminée n'est pas mise à jour ; dans lequel la probabilité d'existence mise à jour dudit au moins un élément de carte indique si l'existence dudit au moins un élément de carte est confirmée, désapprouvée ou si aucune déclaration concernant son existence ne peut être effectuée.

2. Procédé de contrôle de vraisemblance de carte selon la revendication 1, dans lequel la probabilité d'existence (P) est initialisée pour ledit au moins un élément de carte (A3, A4, A5) avec une valeur initiale de 50 %.

3. Procédé de contrôle de vraisemblance de carte selon l'une des revendications précédentes, comprenant l'étape consistant à :
affecter ledit au moins un élément de carte (A3, A4, A5) audit au moins un élément détecté (S3, S4, S5).

4. Procédé selon l'une des revendications précédentes, comprenant l'étape consistant à :
évaluer la probabilité d'existence (P3, P4, P5) dudit au moins un élément de carte (A3, A4, A5) ;
dans lequel l'évaluation de l'un des résultats comprend de confirmer l'élément de carte, de désapprouver l'élément de carte, un élément de carte potentiellement nouveau, et aucune déclaration possible.

5. Procédé selon l'une des revendications précédentes,
dans lequel la mise à jour de la probabilité d'existence (P3, P4, P5) comprend une méthode des ensembles finis aléatoires (RFS) ou une méthode logit.

6. Procédé selon l'une des revendications précédentes,
dans lequel la mise à jour de la probabilité d'existence (P3, P4, P5) dudit au moins un élément de carte (A3, A4, A5) est répétée dans un intervalle de temps.

7. Procédé selon l'une des revendications précédentes,
dans lequel l'incertitude sur les données est utilisée pour déterminer la visibilité de l'élément de carte (A3, A4, A5).

8. Procédé selon l'une des revendications précédentes,
vérifier une validité de la probabilité d'existence (P3, P4, P5).

9. Procédé selon la revendication 8,
dans lequel des données de capteurs (Ds) provenant de différents capteurs du robot au moins semi-autonome (F) sont comparées entre elles afin de vérifier la validité de la probabilité d'existence (P3, P4, P5).

10. Système de contrôle de vraisemblance de carte (10) qui est configuré pour mettre en œuvre le procédé selon l'une des revendications 1 à 9.

11. Procédé de commande d'un robot au moins semi-autonome, comprenant les étapes consistant à :
mettre en oeuvre un procédé de contrôle de vraisemblance de carte selon l'une des revendications 1 à 9 afin de déterminer une probabilité d'existence d'au moins un élément de carte ;
déterminer une trajectoire de robot à l'aide de données de capteurs (Ds), de données de carte (Dk), de données de localisation (DI), et de la probabilité d'existence (P3, P4, P5) dudit au moins un élément de carte (A3, A4, A5) ;
commander le robot au moins partiellement autonome sur la base de la trajectoire de robot déterminée.

12. Procédé selon la revendication 11, comprenant les étapes consistant à :
déterminer un mode de commande à l'aide des données de capteurs (Ds), des données de carte (Dk), des données de localisation (DI), et de la probabilité d'existence (P3, P4, P5) dudit au moins un élément de carte (A3, A4, A5) ;
commander le robot au moins partiellement autonome sur la base du mode de commande déterminé.
